**Europäisches Patentamt**

**European Patent Office**

**Office européen des brevets**

(19)

(11) Veröffentlichungsnummer: **0 069 884**
**B1**

(12) # EUROPÄISCHE PATENTSCHRIFT

(45) Veröffentlichungstag der Patentschrift:
27.12.85

(51) Int. Cl.⁴: **B 23 P 15/28**

(21) Anmeldenummer: 82105421.0

(22) Anmeldetag: 21.06.82

(54) **Einrichtung zur Herstellung von aus Bandmaterial geschnittenen wärmebehandelten Blechteilen, Plangebilden, Schnittplatten, insbesondere Ampullenfeilen.**

(43) Veröffentlichungstag der Anmeldung:
19.01.83 Patentblatt 83/3

(45) Bekanntmachung des Hinweises auf die Patenterteilung:
27.12.85 Patentblatt 85/52

(84) Benannte Vertragsstaaten:
BE CH DE FR GB IT LI NL SE

(56) Entgegenhaltungen:
EP - A - 0 029 660
AT - B - 115 592
AT - B - 129 232
DE - A - 1 926 033
DE - C - 598 672
FR - A - 2 213 817
US - A - 1 504 771

(73) Patentinhaber: **Richter Gedeon Vegyészeti Gyár R.T.,
Gyömröi ut 19-21, H-1475 Budapest X (HU)**

(72) Erfinder: **Balázs, János, Kund u. 4, Budapest 1192 (HU)**
Erfinder: **Bánó, Tibor, Orsó u. 51, Budapest 1026 (HU)**
Erfinder: **Kollár, Arpád, Arkádos u. 34,
Budapest 1171 (HU)**
Erfinder: **Kovács, Tibor, Bagdánfy u. 7/a,
Budapest 1117 (HU)**
Erfinder: **Lengyel, Dénes, Téglavetö u. 26,
Budapest 1105 (HU)**
Erfinder: **Mózer, Ferenc, Szamuely u. 24,
Budapest 1093 (HU)**

(74) Vertreter: **Eitle, Werner, Dipl.-Ing. et al, Hoffmann, Eitle
& Partner Patentanwälte Arabellastrasse 4,
D-8000 München 81 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Einrichtung zur Herstellung von aus Bandmaterial abgelängten, wärmebehandelten Blechteilen, Schnittplatten, Klingen od. dgl., insbesondere Ampullenfeilen, nach dem Gattungsbegriff des Anspruchs 1.

In den verschiedensten Industriezweigen besteht vielfach die Forderung nach einer hochproduktiven massenartigen Fertigung von den Charakter von Plangebilden ausweisenden wärmebehandelten, insbesondere gehärteten Erzeugnissen, insbesondere Schnittplatten, Klingen und sonstigen Teilen, deren Herstellung zweckmäßig von aufgewickeltem Bandmaterial ausgehend durch dessen verformende Bearbeitung und Ablängung erfolgt. Ein typisches Beispiel derartiger Produkte sind die Ampullenfeilen, von denen bereits ein einziger Betrieb jährlich eine Stückzahl von mehreren zehn Millionen benötigt bzw. verwendet und an die die Verbraucher insbesondere wegen der nötigen Verwendbarkeit für Verpackungsmaschinen der pharmazeutischen Industrie hinsichtlich der Geradheit, der Maßtoleranz, der Korrosionsbeständigkeit usw. ziemlich hohe technische Forderungen stellen. Die Ampullenfeilen produzierenden bekannten Einrichtungen arbeiten im allgemeinen mit Bandstahl als Ausgangswerkstoff, dessen eine Kante mit einer zackigen Schneide versehen und hiernach in Stücke von der gewünschten Länge geschnitten und einer Wärmebehandlung unterzogen wird. Eine an das fertige wärmebehandelnde Produkt gestellte wichtige Forderung ist, daß die Feilen stets vollkommen ebene Platten ohne jede Wölbung bilden müssen. Deformierte, verworfene Stücke verursachen insbesondere bei der Verpackung schwere Betriebsstörungen. Deformierungen der Ampullenfeilen werden im allgemeinen durch die im Laufe der Wärmebehandlung frei werdenden inneren mechanischen Spannungen verursacht.

Bekannt ist eine Ampullenfertigungseinrichtung, bei der das Entstehen der Deformationen im Verlaufe der Wärmebehandlung dadurch vermieden werden soll, daß der Wärmebehandlungsvorgang bei noch unzerschnittenem Band als Ausgangs-Werkstoff unter ständiger Spannung des Bandes vorgenommen wird (ungarische Patentschrift WI-291). Dadurch kann die Neigung des Fertigproduktes zu einem Verwerfen tatsächlich vermindert werden. Andererseits besteht jedoch dabei der Hauptnachteil darin, daß das Ablängen bereits im gehärteten Zustand des Werkstoffes vorgenommen werden muß, was an den Ablängmechanismus schwer zu erfüllende Forderungen in erster Linie hinsichtlich der Betriebssicherheit, der Stabilität, der Standzeit usw. stellt. Die Maßnahme der vorgeschlagenen bekannten Lösung, wonach nur eine teilweise, sich auf den Bereich der Feilenschneide erstreckende Wärmebehandlung vorgenommen werden soll, steht mit dem auf die Verminderung der Verwerfungsneigung abzielenden Grundgedanken im Widerspruch, da dadurch eben diese Deformationsneigung erhöhende innere Spannungen entstehen.

Ziel der Erfindung ist die Entwicklung einer Technologie und einer zur Verwirklichung dieser Technologie geeigneten Einrichtung, welche die hochproduktive Massenproduktion der sämtliche Güteanforderungen erfüllenden oben aufgezählten Erzeugnisse, insbesondere der Ampullenfeilen, ermöglichen und mit großer Sicherheit gewährleisten, daß die Fertigerzeugnisse formbeständig, d. h. insbesondere verwerfungs- bzw. deformationsfrei ausfallen.

Grundlage der Erfindung bildet die Erkenntnis, daß das gesetzte Ziel durch die Anwendung einer technologischen Arbeitsfolge erreicht werden kann, wonach das Ablängen bzw. Trennen nach Erhitzung des Bandmaterials in noch warmem Zustand des Werkstoffes vor dem Abkühlen vorgenommen wird und hiernach das abgelängte Gut während des Abkühlens — zweckdienlicherweise im Ablängwerkzeug — selbst fast bis zum vollständigen Abkühlen zwischen Druckplatten eingespannt gehalten und dadurch ein Freiwerden der eventuellen inneren Spannungen in Form einer Deformation nicht zugelassen wird.

Die technischen Merkmale der Erfindung sind in Anspruch 1 angegeben. Die Unteransprüche 2—6 geben Ausführungsarten der Erfindung an.

Als vorteilhaft erwies sich die Verwendung von wassergekühlten Druckplatten in der Trenn- und Abkühlvorrichtung. Bei einer zweckdienlichen Ausführungsform hat die erfindungsgemäße Einrichtung eine das Bandmaterial im Bereich vor und hinter der Trenn- und Abkühlvorrichtung ergreifende mit Stromzuführungselementen versehene Erhitzeinheit mit direkter Widerstandsheizung und eine das Band auch während der Erhitzung unter einer gewissen Vorspannung haltende Vorschubvorrichtung. Die erfindungsgemäße Einrichtung besitzt ferner vorteilhaft eine an das Bandmaterial aus seitlicher Richtung angepreßte mindestens eine verzahnte Rolle enthaltende Verzahneinheit und bzw. oder eine an das Bandmaterial von unten und oben angepreßte und eine zur Ebene des Bandmaterials annähernd parallele Drehebene aufweisende, je eine Schleifscheibe enthaltende Schärfeinheit. Wegen der die Produktivität erhöhenden und auch der sonstigen vorteilhaften Wirkungen haben die zweckdienlichen Ausführungen der erfindungsgemäßen Einrichtung gleichzeitig mehrere, vorzugsweise drei parallele Bandmaterialbahnen bearbeitende funktionelle Einheiten.

Das Ausgangsmaterial der erfindungsgemäßen Einrichtung ist ein der Stärke und Breite des herzustellenden Teils, z. B. der Ampullenfeile, in seinen Abmessungen entsprechendes, zur Wärmebehandlung geeignetes gewalztes Stahlband. Die eine Kante des Bandes wird mittels einer verzahnten, nicht angetriebenen, mit dem Material lediglich in Reibverbindung stehenden Rolle während des Vorschubes verzahnt und hiernach scharf geschliffen. Ein Stück des so vorbereiteten Bandmaterials wird z. B. im Falle von drei parallele Bandbahnen gleichzeitig bearbeitenden Einrichtungen durch eine die drei Phasen gleichzeitig belastende direkte Widerstandsheizung bis auf die Härtetemperatur erhitzt und dann in den Feilenabmessungen entsprechende Stück getrennt bzw. abgelängt. Das Trennen und das zum Härten erforderliche Abkühlen erfolgt zwischen den in der kombinierten Trenn- und Abkühlvorrichtung zusammengepreßten Druckplatten. Die so behandelten Erzeugnisse werden in ihrem ganzen Querschnitt durchgehärtet und behalten ihre durch die zusammengepreßten Druckplatten bestimmte, z. B. gerade, d. h. wölbungslose Ebene oder ebengebogene Form. Im Interesse der guten Materialausnutzung und der entsprechenden Leistung wird je Zyklus ein z. B. der Länge von etwa 15 Teilen (Feilen) entsprechendes Bandstück vorgeschoben und erhitzt, was im Falle von drei parallel angeordneten Bahnen während eines Zyklus 45 Produkte, d. h. je Stunde etwa die Herstellung von 8000 Teilen ermöglicht. Die so produzierten Erzeugnisse verändern ihre Form auch im Laufe der weiteren Arbeitsgänge, z. B. Massengalvanisierung, nicht mehr.

Die Erfindung wird im nachstehenden anhand einer besonders vorteilhaften Ausführungsform aufgrund der Zeichnung detailliert beschrieben:

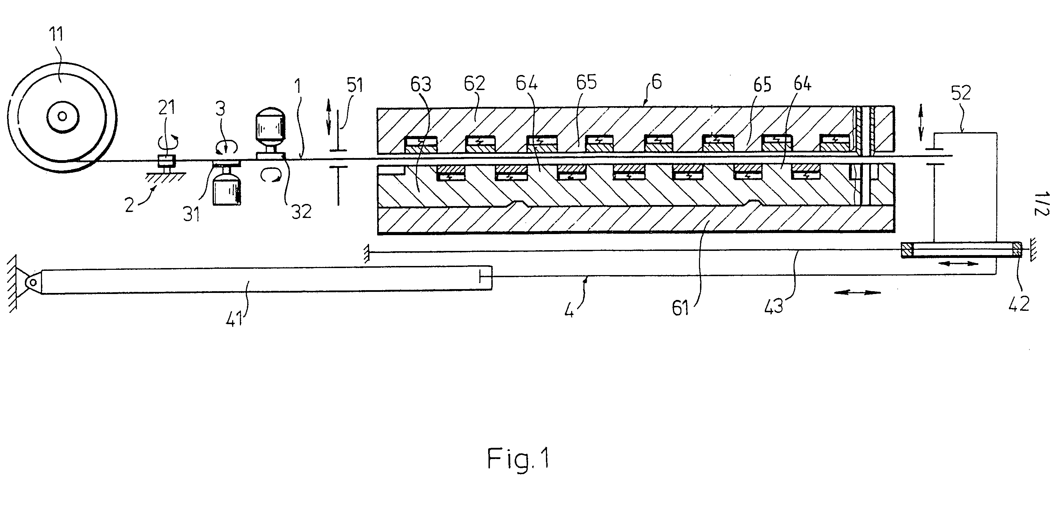

Fig. 1 zeigt diese Ausführungsform der erfindungsgemäßen Einrichtung in Seitenansicht und zum Teil im Längsschnitt;

Fig. 2 zeigt dieses Ausführungsbeispiel in Draufsicht.

Bei der dargestellten, zur Herstellung von Ampullenfeilen geeigneten Ausführung der erfindungsgemäßen Einrichtung wird das intermittierende Abziehen des auf dem Spulenkörper 11 gelagerten Bandmaterials 1 durch den durch den pneumatischen Vorschubzylinder 41 angetriebenen Vorschubmechanismus 4 vorgenommen, dessen eine lineare alternierende Bewegung verrichtender Schlitten 42 durch eine feststehende Führung 43 geführt wird. Unmittelbar nach dem Spulenkörper 11 ist eine Verzahneinheit 2 angeordnet, deren an die Seitenkanten des Bandmaterials 1 angepreßte verzahnte Rollen 21, 22 während des Vorschubs des Bandmaterials 1 dessen Seitenkanten mit der für Ampullenfeilen erforderlichen Verzahnung bzw. Verzackung versehen sind. Insbesondere im Falle von Ampullenfeilen reicht im allgemeinen auch die Verzahnung von nur einer Seitenkante des Bandmaterials 1 aus, so daß hier nur die eine Rolle 21 verzahnt sein muß, während die andere Rolle 22 die Funktion einer gegenhaltenden Stützrolle versieht und in gewissen Fällen noch zusätzliche Führungsfunktionen hat.

In Vorschubrichtung folgt der Verzahneinheit 2 eine Scharfschleifeinheit 3, welche zur Ebene des Bandmaterials 1 annähernd parallele Rotationsebenen aufweisende Schleifscheiben 31, 32 enthält. Die eine Schleifscheibe 31 bearbeitet die Oberfläche des Bandmaterials 1 von unten, die andere Schleifscheibe 32 von oben. So wird eine ein einstellbares Maß aufweisende verzahnte Schneide im Arbeitsbereich der Feile fertiggestellt.

In Richtung des Bandtransportes fortschreitend folgt der Bereich der eigentlichen erfindungsgemäßen Erhitz-, Trenn- und Abkühlvorrichtung, in der unterhalb der Ebene des Bandmaterials 1 ein Querschlitten 61 angeordnet ist, welcher die Messerpaare 64, 65 und die Kühlwassergänge enthaltenden unteren und oberen Druckplatten 62, 63 der Trenn- und Kühlvorrichtung stützt und führt.

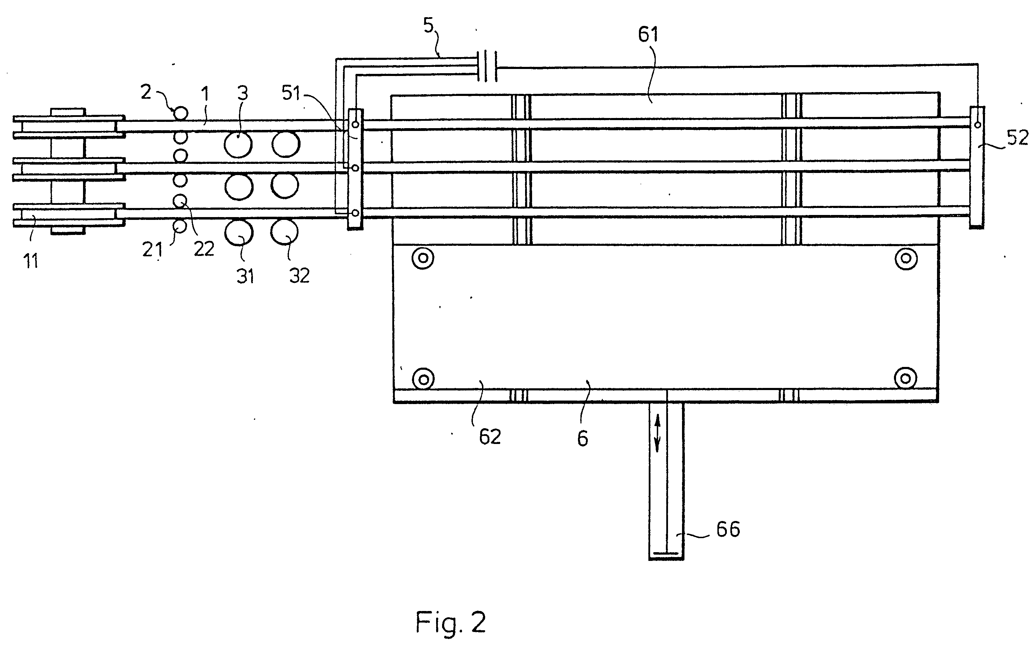

In dem in Fig. 2 in Draufsicht sichtbaren Betriebszustand befindet sich die Trenn-Abkühlvorrichtung 6 in ihrer außerhalb der Spurlinie der Bandmaterialien 1 liegenden seitlichen Endstellung. In dieser Figur ist auch der die Vorrichtung betätigende pneumatische Arbeitszylinder 66 dargestellt. Vor der Betätigung der Trenn- und Abkühlvorrichtung 6 kommt es zur Erhitzung des Bandmaterials 1 bis auf die Härtetemperatur, was durch die die Stromzuführungselemente 52, 51 enthaltende Erhitzeinheit 5 mit direkter Widerstandsheizung von einem Niederspannungs-Speisegerät vorgenommen wird.

Die dargestellte Einrichtung ist für die Bearbeitung von gleichzeitig drei parallele Spurlinien aufweisenden Bandmaterialbahnen 1 ausgebildet, wodurch eine erhöhte Maschinenleistung bzw. Produktivität erreicht wird und das Erhitzen der einzelnen Bandmaterialien von je einer Phase gespeist mit einer symmetrischen Netzbelastung vorgenommen werden kann.

Die Steuerung der Einrichtung ist zweckdienlicherweise so ausgeführt, daß die Bandmaterialien 1 während ihrer Erhitzung mittels der Vorschubvorrichtung 4 durch Aufrechterhaltung des Einspannens des Bandendes und mindestens des teilweisen Vorschubdruckes bzw. der freien Hublänge unter einer gewissen Vorspannung gehalten werden und dadurch die infolge der Wärmedehnung eintretende Verlängerung ausgeglichen bzw. die daraus andernfalls resultierende Durchbiegung verhindert wird. Nach Erreichen der Härtetemperatur wird die Heizung abgestellt und die in geöffnetem Zustand befindlichen im Abstand gehaltenen Druckplatten 62, 63 der Trenn- und Abkühlvorrichtung 6 werden entlang des Querschlittens 61 unter bzw. über die erhitzten Bandbahnen 1 gefahren. Hiernach werden mittels eines in der Zeichnung nicht dargestellten hydraulischen oder pneumatischen Preßzylinders die Druckplatten 62, 63 geschlossen und die Bandmaterialien im warmen Zustand auf Maß getrennt. Die Platten 62, 63 werden bis zur vollständigen Abkühlung der abgelängten Ampullenfeilen in zusammengeschlossenem Zustand gehalten, wodurch deren Formänderungen und Deformationen mit großer Sicherheit vermieden bzw. ausgeschlossen werden. Die Intensität der Abkühlung kann mit Hilfe des in den Druckplatten vorgesehenen und zweckdienlicherweise durch Wasser einstellbarer Menge durchströmten Bohrungs- bzw. Kanalsystems bis zum jeweils erforderlichen Maße erhöht werden.

Im Rahmen des Erfindungsgedankens kann natürlich die Herstellung jedes anderen aus Bandmaterial gefertigten Blechteils verwirklicht werden, bei dem die formgebende Fläche der Druckplatte eine räumliche Kurve, z. B. eine gewölbte oder eine sonstige kompliziertere Form aufweisen kann.

Der beanspruchte Schutz ist nicht auf die im vorstehenden lediglich als Beispiel beschriebene und in der Zeichnung dargestellte Ausführung beschränkt. Die erfindungsgemäße Einrichtung kann hinsichtlich der Reihenfolge der Konstruktionseinheiten, der konkreten Konstruktionsausführung, der Antriebsart und des Steuersystems in zahlreichen verschiedenen Varianten und Ausführungen in Abhängigkeit von den Forderungen der jeweils herzustellenden deformationsfreien Erzeugnisse ausgeführt werden.

## Patentansprüche

1. Einrichtung zur Herstellung von aus Bandmaterial (1) abgelängten wärmebehandelten Blechteilen, Schnittplatten, Klingen oder dgl., insbesondere Ampullenfeilen, die eine Bandabwickel- und Vorschubeinheit, eine Erhitzungs- und Abkühleinheit sowie eine Abläng- bzw. Trennvorrichtung besitzt, wobei die Abkühleinheit in zwei aneinanderpreßbaren parallelen bzw. annähernd parallelen, gekühlten, vorzugsweise ebenen Druckplatten (62, 63) angeordnet ist, dadurch gekennzeichnet, daß in den die Abkühleinrichtung enthaltenden Druckplatten (62, 63) eine Trennvorrichtung in Form von Messerpaaren (64, 65) angeordnet ist.

2. Einrichtung nach Anspruch 1, dadurch gekennzeichnet, daß die die Trenn- und Abkühlvorrichtung (6) enthaltenden Druckplatten (62, 63) auf einem Querschnittschlitten (61) zur Transportlinie des Bandmaterials (1) in Querrichtung alternierend beweglich sind.

3. Einrichtung nach Anspruch 1 bzw. 3, dadurch gekennzeichnet, daß sie eine mit das Bandmaterial (1) im Bereich vor und hinter der Trenn-Abkühlvorrichtung (6) einspannenden Stromzuleitungselementen (51, 52) versehene, mit direkter Widerstandsheizung ausgestattete Erhitzeinheit (5) und eine das Bandmaterial (1) auch während der Erhitzung unter Vorspannung haltende zweckdienlicherweise pneumatische Vorschubeinrichtung (4) besitzt.

4. Einrichtung nach einem der Ansprüche 1 bis 3, dadurch gekennzeichnet, daß sie eine an das Bandmaterial angepreßte mindestens eine verzahnte Rolle (21, 22) enthaltende Verzahneinheit (2) besitzt.

5. Einrichtung nach einem der Ansprüche 1 bis 4, dadurch gekennzeichnet, daß sie eine an das Bandmaterial (1) von unten und von oben angepreßte und eine zur Ebene des Bandmaterials annähernd parallele Rotationsebene aufweisende, je eine Schleifscheibe (31, 32) enthaltende Schärfschleifeinheit (3) besitzt.

6. Einrichtung nach einem der Ansprüche 1 bis 5, dadurch gekennzeichnet, daß sie gleichzeitig mehrerer, zweckdienlicherweise drei parallele Bandmaterialbahnen bearbeitende Arbeitseinheiten besitzt.

## Claims

1. Arrangement for the manufacture of heat treated sheet components, cutting plates, blades or the like cut from strip material (1), in particular ampoule files, which comprises a strip unwinding and feed unit, a heating and cooling unit and a cutting or separating device, the cooling unit being arranged in two mutually pressable parallel or approximately parallel cooled preferably flat pressure plates (62, 63), characterized in that a separating device is arranged in the form of knife pairs (64, 65) in the pressure plates (62, 63) containing the cooling arrangement.

2. Arrangement according to claim 1 characterized in that the pressure plates (62, 63) containing the separation and cooling device (6) are alternately movable in the transverse direction on a transversely cut slot (61) for the transport line of the strip material (1).

3. Arrangement according to claim 1 or 2 characterized in that it comprises a heating unit (5) provided with current feed elements (51, 52) gripping the strip material (1) in the region before and after the separation-cooling device (6) and provided with direct resistance heating, and an expediently pneumatic arrangement (4) holding the strip material (1) under tension even during heating.

4. Arrangement according to any one of claims 1 to 3 characterized in that it comprises a tooth unit (2) pressed onto the strip material and containing at least one toothed roller (21, 22).

5. Arrangement according to one of claims 1 to 4 characterized in that it comprises a sharpening abrasive unit (3) pressed onto the strip material (1) from below and above and having a plane of rotation approximately parallel to the plane of the strip material and comprising a respective abrasive disc (31, 32).

6. Arrangement according to one of claims 1 to 5 characterized in that it comprises simultaneously a plurality of working units expediently processing three parallel strip material runs.

## Revendications

1. Dispositif pour fabriquer, à partir d'un matériau en feuillard (1), des pièces en tôle, des plaques de découpage, des lames et analogues, et notamment des limes pour ampoules, traitées thermiquement, qui comprend une unité de déroulement et d'avance de bande, une unité de chauffage et de refroidissement, ainsi qu'un dispositif de découpage ou de tronçonnage, ladite unité de refroidissement étant disposée dans deux plaques de pression (62, 63) refroidies sensiblement parallèles, de préférence planes et susceptibles d'être pressées l'une contre l'autre, caractérisé en ce qu'un dispositif de tronçonnage en forme de paires de couteaux (64, 65) est disposé dans les plaques de pression (62, 63) comportant l'unité de refroidissement.

2. Dispositif selon la revendication 1, caractérisé en ce que les plaques de pression (62, 63) comportant l'unité de tronçonnage et de refroidissement (6) sont déplaçables en alternance et en direction transversale sur un chariot de coupe transversale (61), par rapport à la ligne de transport du matériau en feuillard (1).

3. Dispositif selon la revendication 1 ou 2, caractérisé en ce qu'il comporte une unité de chauffage (5) munie de moyens de chauffage ohmique direct qui est pourvue d'éléments d'amenée de courant électrique (51, 52) susceptibles de serrer le matériau en feuillard (1) dans la zone en amont et en aval de l'unité de tronçonnage et de refroidissement (6), ainsi qu'un dispositif d'avance (4), de préférence pneumatique, qui maintient ledit matériau en feuillard (1) dans une condition de précontrainte, même pendant l'échauffage.

4. Dispositif selon une des revendications 1 à 3, caractérisé en ce qu'il comporte une unité d'endentement (2) comprenant au moins un rouleau denté (21, 22) et pressée contre ledit matériau en feuillard.

5. Dispositif selon une des revendications 1 à 4, caractérisé en ce qu'il comporte une unité d'affûtage (3) pressée par le haut et par le bas contre ledit matériau en feuillard (1) et comprenant au moins une meule (31, 32) pour chaque côté, tout en définissant un plan de rotation sensiblement parallèle au plan dudit matériau en feuillard.

6. Dispositif selon une des revendications 1 à 5, caractérisé en ce qu'il comporte plusieurs unités de travail susceptible de façonner simultanément une pluralité de bandes de matériau en feuillard, et notamment trois bandes parallèles de ce matériau.

Fig.1

Fig. 2